# FASCICULE DE BREVET EUROPEEN

(11) **EP 2 751 049 B1**
(45) Date de publication et mention de la délivrance du brevet: **29.04.2020**
(21) Numéro de dépôt: 12756767.5
(22) Date de dépôt: 06.08.2012
(51) Int. Cl.: C04B 41/52, C04B 41/89, C04B 41/87, C04B 41/00, C04B 41/50, C04B 35/645, C04B 35/58

(54) **MATERIAU ULTRA-REFRACTAIRE STABLE EN ENVIRONNEMENT HUMIDE ET SON PROCEDE DE FABRICATION**
ULTRA FEUERFESTES MATERIA STABIL IN FEUCHTER UMGEBUNG UND HERSTELLUNGSVERFAHREN.
ULTRA REFRACTORY MATERIAL STABLE AT HUMID ENVIRONMENT AND MANUFACTURING PROCESS THEREOF.

(30) Priorité: 31.08.2011 FR 1157670
(43) Date de publication de la demande: 09.07.2014
(73) Titulaire: ARIANEGROUP SAS, 75015 Paris (FR)
(72) Inventeur: COURCOT, Emilie, F-33320 Le Taillan (FR); THEBAULT, Jacques, F-33200 Bordeaux (FR); SAUVEROCHE, Anne, F-33290 Le Pian Medoc (FR)
(74) Mandataire: Cabinet Beau de Loménie
(86) Numéro de dépôt international: PCT/FR2012/051851
(87) Numéro de publication internationale: WO 2013/030484

(56) Documents cités:
- DE-A1- 3 815 648
- DE-A1-102006 035 792
- GB-A- 1 384 883
- JP-A- 8 148 294
- US-A- 5 036 028
- COURTRIGHT E L ET AL: "Oxidation of hafnium carbide and hafnium carbide with additions of tantalum and praseodymium", OXIDATION OF METALS, KLUWER ACADEMIC PUBLISHERS-PLENUM PUBLISHERS, NE , vol. 36, no. 5-6 1 décembre 1991 (1991-12-01), pages 423-437, XP002649250, ISSN: 1573-4889 Extrait de l'Internet: URL:http://www.springerlink.com/content/x7 277501v14431l7/ [extrait le 2011-07-08]
- SCITI D ET AL: "Oxidation behaviour of HfB2-15 vol.% TaSi2 at low, intermediate and high temperatures", SCRIPTA MATERIALIA, ELSEVIER, AMSTERDAM, NL, vol. 63, no. 6, 1 septembre 2010 (2010-09-01), pages 601-604, XP027125482, ISSN: 1359-6462 [extrait le 2010-06-04]
- SCITI D ET AL: "Spark plasma sintering of HfB2 with low additions of silicides of molybdenum and tantalum", JOURNAL OF THE EUROPEAN CERAMIC SOCIETY, ELSEVIER SCIENCE PUBLISHERS, BARKING, ESSEX, GB, vol. 30, no. 15, 1 novembre 2010 (2010-11-01), pages 3253-3258, XP027231399, ISSN: 0955-2219 [extrait le 2010-07-16]
- LAURA SILVESTRONI ET AL: "Densification of ZrB2-TaSi2 and HfB2-TaSi2 Ultra-High-Temperature Ceramic Composites.", J. AM. CERAM. SOCIETY, vol. 94, no. 6, 1 juin 2011 (2011-06-01), pages 1920-1930, XP002670957, Italy

## Description

### Arrière-plan de l'invention

L'invention concerne la réalisation de matériau ultra-réfractaire résistant à haute température en milieu oxydant notamment en présence d'air, de vapeur d'eau et, plus généralement, en présence de toute phase gazeuse ou liquide contenant de l'oxygène ou un de ses composés.

L'invention concerne notamment la réalisation de pièces en matériau réfractaire aptes à constituer une protection résistante en milieu oxydant à haute température.

Elle concerne également la protection à haute température en milieu oxydant des matériaux composites thermostructuraux formés d'un renfort fibreux densifié par une matrice. L'invention concerne plus particulièrement les matériaux composites thermostructuraux contenant du carbone et/ou du carbure de silicium (SiC) tels que les matériaux composites carbone/carbone (C/C) qui sont constitués d'un renfort en fibre de carbone densifié par une matrice carbone et les matériaux composites à matrice céramique dont les fibres et/ou la matrice contient du SiC .

L'invention concerne encore la protection à haute température des matériaux monolithiques à base de carbone (ex. graphite) et en céramique à base de SiC.

Les matériaux composites thermostructuraux sont caractérisés par leurs propriétés mécaniques qui les rendent aptes à constituer des pièces de structure et par leur capacité à conserver ces propriétés mécaniques à des températures élevées. Cependant, lorsqu'ils contiennent du carbone, les matériaux composites présentent l'inconvénient important de s'oxyder dès 400°C sous air ou dans un milieu oxydant et de perdre en partie leurs propriétés thermostructurales.

Par ailleurs, dans le cas des matériaux en céramique monolithique ou matériaux composites comprenant du SiC, le SiC s'oxyde suivant deux modes. Le premier mode correspond à une oxydation dite « passive » qui se produit sous pression partielle d'oxygène élevée et température relativement faible, le SiC se recouvrant d'une couche de silice. Le deuxième mode, dit « oxydation active », se produit lorsque le SiC est porté à très haute température sous faible pression partielle d'oxygène, le SiC étant alors rapidement consommé car tous les oxydes formés sont à l'état gazeux.

Dans le cas des matériaux composites C/C, il est connu d'utiliser des couches de protection constituées de dépôts monocouches ultra-réfractaires à base de diborure d'hafnium (HfB₂) ou de diborure de zirconium (ZrB₂). Parmi les différents systèmes fabriqués par mélange de (Zr/Hf)B₂ et de SiC, un des plus utilisés est celui comportant 20% volumique de SiC (soit le rapport atomique ((Zr ou Hf)/Si=2.7), avec éventuellement des ajouts (RE₂O₃ de préférence à hauteur de 3% volumique (RE désignant une terre rare comprenant l'yttrium (Y) et les lanthanides), ou REB₆, MoSi₂ ou AIN de préférence à hauteur de 10% en volume), ou un mélange de ces compositions.

Cependant, ce type de matériau de protection présente deux inconvénients, à savoir :
- un coefficient de dilatation thermique trop élevé par rapport à celui du matériau C/C, ce qui peut entraîner l'apparition de fissures dans la couche ultra-réfractaire et de décohésions le long de l'interface entre le matériau C/C et la couche. Les fissures ainsi créées deviennent alors des chemins de diffusion de l'oxygène et de l'eau (si présente dans l'environnement d'utilisation), ce qui conduit à une oxydation du substrat C/C et à l'affaiblissement, voire la perte, de ses propriétés mécaniques,
- une mauvaise résistance à l'oxydation pour des températures supérieures à 2300°C.

Afin de pallier le premier inconvénient mentionné ci-dessus, une sous-couche à base de SiC uniquement a été introduite entre le substrat C/C et la couche ultra-réfractaire de manière à former une couche d'adaptation de coefficient de dilatation thermique. Toutefois, cette solution n'est pas non plus considéré comme suffisamment satisfaisante car, suivant les conditions d'utilisation, le SiC s'oxyde soit de façon passive en se recouvrant d'une couche de silice qui interagit avec la couche ultra-réfractaire, soit de façon active, ce qui entraîne la formation de porosités voire de décohésions dans la couche de SiC.

Les documents "High temperature oxidation-resistant hafniumtantalum alloys" K. Marnoch, J. Metals. 1225 (1965) et "Oxidation of refractory metallic coatings on carbon fibers heated up to 1850 °C", A.-S. Andréani et al., ICMCTF N°37, San Diego, 2010, vol. 205, n° 5 (482 p.), pp. 1262-1267, proposent l'utilisation d'alliages d'hafnium (Hf) et de tantale (Ta) ou des compositions mixtes HfC-Ta, Hf-TaB2, ou Hf-TaC afin d'améliorer la résistance à l'oxydation des systèmes ultra-réfractaires. Si ces systèmes donnent des résultats satisfaisants sous air, ils ne peuvent pas être utilisés en présence d'eau ou de vapeur d'eau en raison de la grande instabilité des métaux Hf et Ta, ces métaux générant en effet en présence d'eau des vapeurs explosives.

Bien que ces compositions soient résistantes sous air à plus de 2000°C, elles ne peuvent pas être utilisées en présence d'eau pour des raisons d'instabilité des matériaux métalliques Hf et Ta en présence d'eau. Cet inconvénient limite le domaine d'utilisation de ces compositions en excluant les applications impliquant des atmosphères contenant de l'eau. En outre, certaines voies d'élaboration des matériaux, comme par exemple une voie liquide dans laquelle un solvant aqueux peut être utilisé, ne peuvent pas être utilisées. Enfin, il se pose le problème du stockage des poudres pour lequel il faut garantir qu'il n'y ait pas d'humidité.

Or, il existe un besoin pour un matériau de protection résistant à l'oxydation à des températures supérieures à 2000°C, et en particulier en présence d'environnement humide (présence d'eau).

Il en est ainsi notamment pour des composants de moteur fusée, ou de moteurs d'avion de type turboréacteurs où la vapeur d'eau et le gaz carbonique produits et éjectés à travers la tuyère créent un environnement humide et oxydant. Ce problème de protection se pose également pour des boucliers thermiques de véhicules de rentrée dans l'atmosphère.

Les documents US 5 036 028 et DE 38 15 648 divulguent un matériau composé réfractaire qui contient au moins du borure d'hafnium et du borure de tantale.

Le document DE 10 2006 035792 divulgue une pièce résistant à haute température comprenant un substrat, où une couche comprenant entre autres des borures du Ta, Hf ou Zr est formée.

Les documents SCITI D ET AL : « Oxidation behaviour of HfB2-15 vol.% TaSi2 at low, intermediate and high temperatures", SCRIPTA MATERIALIA, ELSEVIER, AMSTERDAM, NL, vol. 63, no. 6, 1 septembre 2010 (2010-09-01), pages 601-604, XP0271254482, SCITI D ET AL : "Spark plasma sintering of HfB2 with low additions of silicides of molybdenum and tantalum", JOURNAL OF THE EUROPEAN CERAMIC SOCIETY, ELSEVIER SCIENCE PUBLISHERS, BARKING, ESSEX, GB, vol. 30, no. 15, 1 novembre 2010 (2010-11-01), pages 3253-3258, XP027231399 et LAURA SILVESTRONI ET AL : "Densification of ZrB2-TaSi2 and HfB2-TaSi2 Ultra-High-Temperature Ceramic Composites", J. AM. CERAM. SOCIETY, vol. 94, no. 6, 1 juin 2011 (2011-06-01), pages 1920-1930, XP002670957, Italy, décrivent un produit réfractaire formé par réaction de HfB2 avec TaSi2 ou de HBT3 avec HBT.

### Objet et résumé de l'invention

L'invention a pour but de fournir un matériau réfractaire résistant à haute température, en particulier à l'oxydation à des températures supérieures ou égales à 2000°C, dans des conditions de pression allant de très basse pression (≥ 1 Pa) jusqu'à des valeurs plus élevées (> 30 MPa) et dans des environnements impliquant notamment la présence d'eau.

Ce but est atteint grâce à un matériau réfractaire résistant à haute 5 température en milieu oxydant caractérisé en ce qu'il contient :
- 50% en volume de HfB₂,
- 25% en volume de HfC,
- 25% en volume de TaB₂.

Un tel matériau constitue un système de protection qui est apte à conserver son caractère ultra-réfractaire et sa stabilité chimique qu'elles que soient les conditions d'utilisations envisagées et en particulier en présence d'eau. En effet, en utilisant de l'hafnium et du tantale sous forme de composés ou dérivés plutôt que sous forme métallique, on évite le risque de réactions violentes qui peuvent se produire avec l'eau lorsque ces éléments sont présents sous forme métallique.

En outre, en utilisant des borures d'hafnium et de tantale, la composition contient du bore qui permet d'augmenter le caractère ultra-réfractaire du matériau tout en apportant une première phase de cicatrisation aux environs de 1700°C.

L'introduction de carbone permet d'augmenter le caractère ultra-réfractaire du matériau, ce qui permet de l'utiliser à des températures encore plus importantes.

Dans des conditions d'oxydation à ultra haute température, la présence de bore, ou de carbone entraîne uniquement la formation de produits gazeux, tels que CO, CO₂, B₂O₃, qui ne sont pas nuisibles à la stabilité des phases solides ou liquides formées lors de l'utilisation.

L'invention a également pour objet une pièce réfractaire résistante à haute température en milieu oxydant caractérisée en ce qu'elle est constituée en un matériau réfractaire selon l'invention.

L'invention concerne aussi une pièce comprenant un substrat en un matériau déterminé apte à être utilisé à des températures supérieures à 2000°C, ladite pièce étant munie d'un revêtement de protection à haute température en milieu oxydant caractérisée en ce que ledit revêtement de protection est constitué d'un matériau réfractaire selon l'invention. La pièce peut notamment être destinée à des applications dans le vannage, la propulsion, la rentrée atmosphérique ou encore le solaire.

Le substrat de la pièce est réalisé notamment en :
- en matériau céramique monolithique à base de carbure de silicium,
- en matériau monolithique à base de carbone (ex. graphite),
- en matériau composite à matrice céramique comprenant du carbure de silicium, ou
- en matériau composite C/C prétraité ou non.

Dans le cas d'un substrat en matériau composite C/C, la pièce peut comprendre en outre une couche de carbure de silicium au plus près du matériau C/C du substrat et une couche de carbure de zirconium ou de carbure d'hafnium interposée entre la couche de carbure de silicium et le revêtement de protection. On forme ainsi, une double couche d'accrochage qui permet d'accommoder les contraintes thermomécaniques entre le matériau du substrat et le revêtement de protection selon les épaisseurs de couches introduites.

La présence de SiC dans le substrat de la pièce ou dans des couches sous-jacentes au revêtement de protection n'est pas ici problématique car le revêtement de protection de l'invention forme une barrière efficace qui empêche l'oxygène d'atteindre le SiC présent dans la pièce.

L'invention propose encore un procédé de réalisation d'une pièce en matériau réfractaire résistant à haute température en milieu oxydant caractérisé en ce qu'il comprend :
- la réalisation d'une composition contenant :
- 50% en volume de HfB₂,
- 25% en volume de HfC,
- 25% en volume de TaB₂,
- la mise en forme de la composition et la densification de ladite composition.

L'invention concerne aussi un procédé de réalisation d'une couche de protection résistante à haute température en milieu oxydant sur une pièce comprenant un substrat en un matériau déterminé, ledit procédé comprenant :
- l'application sur la pièce d'une composition contenant :
   - 50% en volume de HfB₂,
   - 25% en volume de HfC,
   - 25% en volume de TaB₂,
- la densification de ladite composition.

Selon l'invention, le substrat de la pièce est notamment réalisé :
- en matériau céramique monolithique à base de carbure de silicium,
- en matériau monolithique à base de carbone (ex. graphite),
- en matériau composite à matrice céramique comprenant du carbure de silicium, ou
- en matériau composite C/C prétraité ou non.

Dans, le cas d'un substrat en matériau composite C/C, la pièce peut comprendre en outre une couche de carbure de silicium au plus près du matériau C/C du substrat et une couche de carbure de zirconium ou de carbure d'hafnium interposée entre la couche de carbure de silicium et le revêtement de protection. On forme ainsi, une double couche d'accrochage qui permet d'accommoder les contraintes thermomécaniques entre le matériau du substrat et le revêtement de protection selon les épaisseurs de couches introduites.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une photographie montrant une vue en coupe partielle d'une éprouvette en composite C/C recouverte d'un matériau de protection selon l'invention après exposition de l'éprouvette à un flux thermique haute température en milieu corrosif,
- la figure 2 est une photographie montrant une vue en coupe partielle avant corrosion d'un matériau multicouche comprenant un substrat en composite C/C ayant en surface une couche de SiC et une couche de ZrC respectivement, le substrat étant en outre revêtu d'une couche d'un matériau de protection selon l'invention.

### Description détaillée de modes de réalisation

L'invention propose un nouveau matériau ultra-réfractaire apte à résister à des températures supérieures à 2000°C, et plus particulièrement à 2300°C, en milieu oxydant et en particulier dans un environnement humide impliquant la présence d'oxygène ou de vapeur d'eau.

Le matériau de l'invention peut être utilisé pour former des pièces réfractaires destinées à être utilisées dans de telles conditions comme par exemple des boucliers thermiques de véhicules de rentrée dans l'atmosphère. Le matériau de l'invention peut être également utilisé comme revêtement de protection pour des substrats de pièces destinées à être exposées à de hautes températures (>2300°C) en milieu oxydant comme notamment les cols de tuyères de moteur fusée ou parties de moteurs d'avion notamment de type turboréacteurs.

Le substrat de la pièce peut être en matériau composite thermostructural contenant au moins en partie du carbone, comme par exemple des composites C/C, qui, de façon connue, est un matériau formé d'un renfort en fibres de carbone densifié par une matrice en carbone. Il peut être également réalisé en matériau composite thermostructural à matrice céramique (CMC) qui, ici, correspond à un matériau formé d'un renfort en fibres de carbone ou SiC densifié par une matrice au moins partiellement SiC, comme par exemple les matériaux composites suivants:
- C-C/SiC correspondant à un matériau formé d'un renfort en fibres de carbone et densifié par une matrice comprenant une phase carbone et une phase carbure de silicium,
- C-SiC correspondant à un matériau formé d'un renfort en fibres de carbone densifié par une matrice en carbure de silicium,
- SiC/SiC correspondant à un matériau formé d'un renfort en fibres de carbure de silicium densifié par une matrice en carbure de silicium.

Dans le cas d'un substrat en CMC, celui-ci est de préférence usiné et ne comprend pas de couche de revêtement de type « seal-coat ».

Le matériau de l'invention peut encore être utilisé comme revêtement de protection pour des pièces comprenant un substrat en céramique monolithique à base de SiC ou un substrat monolithique à base de carbone (graphite).

Dans le matériau de l'invention, l'hafnium et le tantale sont exclusivement présents sous forme de composés ou de dérivés. Le matériau de l'invention ne contient pas d'hafnium ou de tantale sous forme élémentaire, dite « métallique », cette forme étant très instable en présence d'eau.

Les composés d'hafnium et de tantale sont présents dans le matériau de l'invention sous une forme non oxyde afin que le matériau ultra-réfractaire de protection selon l'invention forme un système non oxyde initial. Ainsi, avant utilisation en milieu oxydant à haute température, le matériau de l'invention ne contient pas d'oxydes déjà formés, ceux-ci étant générés seulement en cours d'utilisation. Les oxydes formés initialement, c'est-à-dire les oxydes déjà présents dans le matériau lors de son élaboration, présentent en général un coefficient de dilatation élevé et une faible conductivité thermique et sont, par conséquent, sensibles aux chocs thermiques. Lors de l'utilisation d'un matériau comprenant à l'origine de tels oxydes, les montées en températures du matériau vont créer des chocs thermiques au niveau de ces oxydes qui peuvent provoquer des fissures et/ou des écaillages dans le matériau. Avec le matériau de l'invention, un tel inconvénient est évité puisque les oxydes sont formés uniquement lors des montées en température en cours d'utilisation en milieu oxydant.

En effet, en cours d'utilisation, c'est-à-dire en milieu oxydant sur des plages de températures pouvant aller de quelques centaines de degrés Celsius à plus de 2300°C, les constituants du système du matériau vont former seuls ou entre eux des oxydes protecteurs permettant à la pièce ou au revêtement protecteur constitués par le matériau de l'invention de conserver une intégrité mécanique et un caractère réfractaire.

L'hafnium et le tantale sont choisis car ils correspondent à de très bons constituants de base pour le système formé par le matériau de l'invention notamment en raison de leur résistance élevée vis-à-vis des chocs thermiques et de leur capacité à former une barrière efficace contre l'oxygène à température élevée.

Le tantale ne subit pas d'oxydation active et l'oxyde formé par ce dernier est plus stable que B₂O₃ ou SiO₂. L'oxyde de tantale apporte en outre une phase liquide stable qui limite la diffusion de l'oxygène et de l'eau au sein du matériau. L'oxyde d'hafnium reste solide et stable à haute température et permet ainsi d'éviter le soufflage de la phase liquide vis-à-vis des flux environnants (par exemple les flux de combustion haute vitesse circulant dans une tuyère).

L'hafnium et le tantale sont de préférence présents dans le matériau de l'invention sous forme de borure. Ils peuvent être également présents en outre dans certains cas sous forme de carbure et de nitrure.

Le matériau selon l'invention est constitué de :
- 50% en volume de HfB₂,
- 25% en volume de HfC,
- 25% en volume de TaB₂.

Ainsi, la composition selon l'invention contient du bore qui permet d'apporter une première cicatrisation aux environs de 1700°C. Comme indiqué ci-dessus, le bore est apporté dans la composition sous forme de composé d'hafnium et de tantale. Dans la présente invention, on évitera d'apporter du bore sous forme de borure de nickel ou de fer car ces éléments métalliques diminuent le caractère réfractaire de la composition.

En outre, la composition selon l'invention ne contient pas de silicium afin d'éviter le problème d'oxydation active des composés à base de silicium ou une volatilisation importante du SiO₂ formé par oxydation.

Le matériau selon l'invention peut être notamment réalisé à partir d'une composition comprenant un mélange de poudres d'au moins des deux constituants décrits ci-avant.

Le mélange de poudre, après mise en forme, par exemple, par compactage à froid dans un moule (pastillage), est densifié par "frittage flash" ou "SPS" ("Spark Plasma Sintering"). Le frittage flash ou SPS est un procédé similaire au pressage à chaud conventionnel qui peut être également utilisé pour densifier la composition mise en forme. Le "frittage flash" consiste en un traitement thermique sous pression avec passage d'un courant électrique qui permet de consolider la pièce par formation de liaison entre grains sans fusion totale de ceux-ci. Cette soudure réalisée par diffusion de matière, s'accompagne d'une densification, c'est-à-dire d'une diminution du taux de porosité et d'un durcissement qui confère de la cohésion à l'objet mis en forme.

La composition mise en forme suivant celle de la pièce à réaliser est introduite dans une enceinte permettant d'appliquer une pression uniaxiale lors du frittage. Un dispositif permettant de mettre en œuvre ce frittage flash est notamment commercialisé par la société Sumitomo Electric Industries et permet de soumettre l'échantillon à des pulses (3,3 ms) de courant électrique continu (typiquement 0-10 V, 1-5 kA) tout en appliquant une pression de plusieurs dizaines de MPa (jusqu'à 150 MPa) et ceci dans une gamme de températures variant de la température ambiante jusqu'à 2000°C. Les frittages flash sont généralement réalisés sous vide mais il est possible de travailler sous atmosphère inerte (azote, argon).

Un même cycle de frittage peut être pris comme référence pour la densification par frittage flash des diverses compositions du matériau réfractaire selon l'invention, seule la température finale de frittage est modifiée en fonction de la réfractarité des constituants à fritter.

Les paramètres de température choisis pour le cycle de frittage sont par exemple: une montée à 600°C en 3 minutes, suivie d'une montée à la température de frittage de 1600°C avec une vitesse de 100°C/min, puis un palier à cette température pendant 5 minutes et enfin une descente à 600°C en 30 minutes puis l'arrêt du chauffage.

Durant le cycle, une pression de 40 MPa est appliquée progressivement dès le début de la montée en température à 600°C pour refermer la majorité des pores restants et éviter une hétérogénéité de densification dans le matériau après le frittage. Ainsi, dès le début du frittage, un matériau globalement dense peut être obtenu, pour lequel le contact entre les grains est optimal.

Le refroidissement contrôlé permet une relaxation des contraintes résiduelles d'origine thermique et d'éviter la présence de fissures et de microfissures dans le matériau.

Les moules et les pistons utilisés sont en graphite et sont séparés de la composition sous forme de poudre compactée par une feuille de graphite pour éviter tout collage.

Dans le cas de la réalisation d'un revêtement de protection élaboré par frittage flash autour d'une pièce comprenant un substrat en matériau composite thermostructural (par exemple en C/C ou en CMC) ou en SiC monolithique, le substrat de la pièce est placé dans le moule de frittage sur un lit de poudre (correspondant au mélange de poudres des constituants constitutifs du matériau de l'invention), puis est recouvert de cette même poudre afin d'être totalement au centre de la pièce formée par frittage flash. Toutefois, si on le souhaite, seule une partie de la surface du substrat de la pièce peut être recouvert par le matériau de l'invention, par exemple lorsque seulement une partie de la surface doit être protégée.

Les pièces monolithiques et revêtements de protection en matériau réfractaire résistant à haute température en milieu oxydant selon l'invention peuvent être également réalisés par :
- frittage standard,
- projection plasma,
- pressage à chaud,
- par dépôt en phase vapeur (PVD),
- par voie barbotine, ou
- par immersion.

Dans le cas d'une pièce comprenant un substrat en matériau composite C/C, une couche de SiC et une couche de ZrC ou HfC peuvent être formées entre le substrat et le revêtement ultra-réfractaire, la couche de SiC étant formée au plus près du matériau composite C/C du substrat de ladite pièce et la couche de ZrC ou HfC étant interposée entre la couche de SiC et le revêtement de protection.

Les couches de SiC et de ZrC ou HfC peuvent être formées par voie barbotine. Les couches de SiC et de ZrC ou HfC peuvent être également formées en imprégnant le matériau C/C du substrat de la pièce avec une composition réactive fondue contenant au moins, entre 5% et 2/3, en proportion ou pourcentage atomique, de silicium et entre 1/3 et 95 % de zirconium comme décrit dans le document WO 2009/081006 dont le contenu est incorporé ici en référence. Le silicium et zirconium réagissent avec le carbone du matériau traité à une température supérieure à la température de fusion du métal. On forme ainsi en une seule opération deux phases de carbure avec une première phase de SiC sur le carbone du substrat suivie d'une seconde phase de ZrC ou HfC au-dessus de la couche de SiC.

Dans le cas de la protection d'un matériau composite, il est possible d'ancrer le revêtement de protection ultra-réfractaire de l'invention dans le matériau composite ou dans les couches de SiC et de ZrC ou HfC en élaborant ledit revêtement par immersion, voie barbotine ou APS (Aspiration de Poudre Submicronique).

Afin de vérifier l'efficacité d'un matériau réfractaire selon l'invention, des essais ont été réalisés avec échantillons en matériau composite C/C.

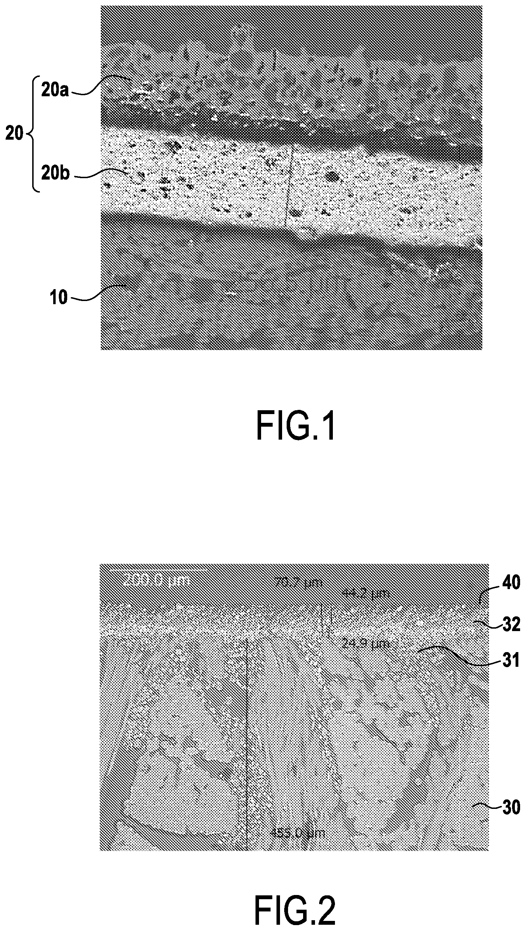

La photographie de la figure 1 montre les résultats obtenus sur un substrat 10 en matériau composite C/C recouvert d'une couche de protection 20 contenant 50% en volume de HfB₂, 25% en volume de HfC et 25% en volume de TaB₂. L'éprouvette ainsi constituée a été exposée à un flux thermique de 2200°C en atmosphère corrosive. On constate que seule une partie supérieure 20a de la couche de protection 20 a été oxydée, la portion sous-jacente 20b demeurant intacte. Le substrat C/C 10 a, par conséquent, été parfaitement protégé.

La photographie de la figure 2 montre un matériau multicouche obtenu à partir d'un substrat 30 en matériau composite C/C comprenant en surface une phase SiC 31 et une phase ZrC 32, ledit substrat étant en outre recouvert d'une couche de protection 40 contenant 50% en volume de HfB₂, 25% en volume de HfC et 25% en volume de TaB₂.

Le tableau ci-dessous montre les vitesses de récession mesurées lors d'essais de corrosion à la température d'oxydation active du SiC (à 2000°C environ) entre :
- un matériau conforme à l'invention contenant 50% en volume de HfB₂, 25% en volume de HfC et 25% en volume de TaB₂,
- un matériau ultra-réfractaire contenant une composition de référence ZrB₂ - SiC - Y₂O₃, plus résistante que celle à base de ZrB₂ - SiC (20 % vol.), et
- un matériau composite thermostructural C/SiC.

Le tableau met en évidence le fait que le matériau de l'invention est plus résistant que le matériau C/SiC et que le matériau ultra-réfractaire de référence (ZrB₂ - 20 % vol. SiC - 20 % vol. Y₂O₃).

| Matériau | Vitesse de dégradation (µm.s⁻¹) |
|---|---|
| HfB₂ - 25 % vol. HfC - 25 % vol. TaB₂ | 1,4 ± 0,2 |
| ZrB₂ - 20 % vol. SiC - 3 % vol. Y₂O₃ | 3,0 ± 0,2 |
| C/SiC | 7,5 ± 0,3 |

## Revendications

1. Matériau réfractaire résistant à haute température en milieu oxydant **caractérisé en ce qu'**il contient :
- 50% en volume de HfB₂,
- 25% en volume de HfC,
- 25% en volume de TaB₂.

2. Pièce réfractaire résistante à haute température en milieu oxydant **caractérisée en ce qu'**elle est constituée en un matériau réfractaire selon la revendication 1.

3. Pièce comprenant un substrat en un matériau céramique monolithique à base de carbure de silicium, ou en matériau monolithique à base de carbone, ou en matériau composite à matrice céramique comprenant du carbure de silicium, ou en un matériau composite C/C, ladite pièce étant munie d'un revêtement de protection à haute température en milieu oxydant, **caractérisée en ce que** ledit revêtement de protection est constitué d'un matériau réfractaire selon la revendication 1.

4. Pièce selon la revendication 3, **caractérisée en ce que** le substrat est en matériau composite C/C.

5. Pièce selon la revendication 4, **caractérisée en ce qu'**elle comprend en outre une couche de carbure de silicium au plus près du matériau composite C/C du substrat de ladite pièce et une couche de carbure de zirconium ou de carbure d'hafnium interposée entre la couche de carbure de silicium et le revêtement de protection.

6. Procédé de réalisation d'une pièce en matériau réfractaire résistant à haute température en milieu oxydant **caractérisé en ce qu'**il comprend la réalisation d'une composition contenant :
- 50% en volume de HfB₂,
- 25% en volume de HfC,
- 25% en volume de TaB₂,
le procédé comprenant en outre la mise en forme de la composition et la densification de ladite composition.

7. Procédé de réalisation d'une couche de protection résistante à haute température en milieu oxydant sur une pièce comprenant un substrat en un matériau céramique monolithique à base de carbure de silicium, ou en matériau monolithique à base de carbone, ou en matériau composite à matrice céramique comprenant du carbure de silicium, ou en un matériau composite C/C, **caractérisé en ce que** le procédé comprend l'application sur la pièce d'une composition contenant :
- 50% en volume de HfB₂,
- 25% en volume de HfC,
- 25% en volume de TaB₂,
le procédé comprenant en outre la densification de ladite composition.

8. Procédé selon la revendication 7, **caractérisé en ce que** le substrat est en matériau composite C/C.

9. Procédé selon la revendication 8, **caractérisé en ce qu'**il comprend en outre la formation d'une couche de carbure de silicium au plus près du matériau composite C/C du substrat de ladite pièce et la formation d'une couche de carbure de zirconium ou de carbure d'hafnium interposée entre la couche de carbure de silicium et la couche de protection.

## Patentansprüche

1. Feuerfestes Material, das gegen hohe Temperaturen in einem oxidierenden Medium beständig ist, **dadurch gekennzeichnet, dass** es enthält:
- 50 Vol.-% HfB₂,
- 25 Vol.-% HfC,
- 25 Vol.-% TaB₂.

2. Feuerfestes Teil, das gegen hohe Temperaturen in einem oxidierenden Medium beständig ist, **dadurch gekennzeichnet, dass** es aus einem feuerfesten Material gemäß Anspruch 1 hergestellt ist.

3. Teil, umfassend ein Substrat aus einem monolithischen Keramikmaterial auf Siliciumcarbidbasis oder aus einem monolithischen Material auf Kohlenstoffbasis oder aus einem Keramikmatrix-Verbundmaterial, das Siliciumcarbid enthält, oder aus einem C/C-Verbundmaterial,
wobei das Teil mit einer Beschichtung zum Schutz vor hohen Temperaturen in einem oxidierenden Medium versehen ist, **dadurch gekennzeichnet, dass** die Schutzbeschichtung aus einem feuerfesten Material gemäß Anspruch 1 besteht.

4. Teil gemäß Anspruch 3, **dadurch gekennzeichnet, dass** das Substrat aus C/C-Verbundmaterial hergestellt ist.

5. Teil gemäß Anspruch 4, **dadurch gekennzeichnet, dass** es ferner eine Schicht aus Siliciumcarbid, die dem C/C-Verbundmaterial des Substrats des Teils möglichst nahe liegt, und eine Schicht aus Zirkoniumcarbid oder Hafniumcarbid umfasst, die zwischen der Schicht aus Siliciumcarbid und der Schutzschicht angeordnet ist.

6. Verfahren zur Herstellung eines Teils aus einem feuerfesten Material, das gegen hohe Temperaturen in einem oxidierenden Medium beständig ist, **dadurch gekennzeichnet, dass** es die Herstellung einer Zusammensetzung umfasst, die enthält:
- 50 Vol.-% HfB₂,
- 25 Vol.-% HfC,
- 25 Vol.-% TaB₂,
wobei das Verfahren ferner die Formgebung der Zusammensetzung und die Verdichtung der Zusammensetzung umfasst.

7. Verfahren zur Herstellung einer Schutzschicht, die gegen hohe Temperaturen in einem oxidierenden Medium beständig ist, auf einem Teil, das ein Substrat aus einem monolithischen Keramikmaterial auf Siliciumcarbidbasis oder aus einem monolithischen Material auf Kohlenstoffbasis oder aus einem Keramikmatrix-Verbundmaterial, das Siliciumcarbid enthält, oder aus einem C/C-Verbundmaterial umfasst, **dadurch gekennzeichnet, dass** das Verfahren das Aufbringen einer Zusammensetzung auf das Teil umfasst, die enthält:
- 50 Vol.-% HfB₂,
- 25 Vol.-% HfC,
- 25 Vol.-% TaB₂,
wobei das Verfahren ferner das Verdichten der Zusammensetzung umfasst.

8. Verfahren gemäß Anspruch 7, **dadurch gekennzeichnet, dass** das Substrat aus C/C-Verbundmaterial hergestellt ist.

9. Verfahren gemäß Anspruch 8, **dadurch gekennzeichnet, dass** es ferner die Bildung einer Schicht aus Siliciumcarbid, die dem C/C-Verbundmaterial des Substrats des Teils möglichst nahe liegt, und die Bildung einer Schicht aus Zirkoniumcarbid oder Hafniumcarbid, die zwischen der Schicht aus Siliciumcarbid und der Schutzschicht angeordnet ist, umfasst.

## Claims

1. A refractory material withstanding high temperatures in an oxidizing medium, the material being **characterized in that** it contains:
• 50% by volume HfB₂;
• 25% by volume HfC; and
• 25% by volume TaB₂.

2. A refractory part withstanding high temperatures in an oxidizing medium, the part being **characterized in that** it is constituted by a refractory material according to claim 1.

3. A part comprising a substrate made up of a monolithic ceramic material based on silicon carbide or of a monolithic material based on carbon, or of a ceramic matrix composite material comprising silicon carbide, said part being provided with a protective coating for providing protection at high temperature in an oxidizing medium, the part being **characterized in that** said protective coating is constituted by a refractory material according to claim 1.

4. A part according to claim 3, **characterized in that** the substrate is made of C/C composite material.

5. A part according to claim 4, **characterized in that** it further comprises a layer of silicon carbide close to the C/C composite material of the substrate of said part and a layer of zirconium carbide or of hafnium carbide interposed between the silicon carbide layer and the protective coating.

6. A method of making a part out of refractory material withstanding high temperatures in an oxidizing medium, the method being **characterized in that** it comprises making a composition containing:
• 50% by volume HfB₂;
• 25% by volume HfC; and
• 25% by volume TaB₂.
the method further comprising shaping the composition and densifying said composition.

7. A method of making a protective layer that withstands high temperatures in an oxidizing medium on a part comprising a substrate made of a monolithic ceramic material based on silicon carbide or of a monolithic material based on carbon, or of a ceramic matrix composite material comprising silicon carbide, said method being **characterized in that** it comprises applying on the part a composition containing:
- 50% by volume HfB₂;
- 25% by volume HfC; and
- 25% by volume TaB₂.
the method further comprising densifying said composition.

8. A method according to claim 7, **characterized in that** the substrate is made of C/C composite material.

9. A method according to claim 8, **characterized in that** it further comprises forming a layer of silicon carbide close to the C/C composite material of the substrate of said part and forming a layer of zirconium carbide or of hafnium carbide interposed between the layer of silicon carbide and the protective layer.
